(19) Europäisches Patentamt / European Patent Office / Office européen des brevets

(11) **EP 4 763 540 A1**

(12) **EUROPEAN PATENT APPLICATION**

(43) Date of publication:
**24.06.2026 Bulletin 2026/26**

(21) Application number: **24223083.7**

(22) Date of filing: **23.12.2024**

(51) International Patent Classification (IPC):
**B60C 23/04** $^{(2006.01)}$

(52) Cooperative Patent Classification (CPC):
**B60C 23/0476**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bridgestone Mobility Solutions B.V.
1083 HK Amsterdam (NL)**

(72) Inventor: **PURVES, Neil James
1083 HK Amsterdam (NL)**

(74) Representative: **Dehns
10 Old Bailey
London EC4M 7NG (GB)**

(54) **AIR LOSS DETECTION**

(57) A computer implemented method (200) for detecting air loss in tires (3) of a vehicle (2), the method (200) comprising: i) estimating an ambient temperature $T_{amb}$ at the vehicle (2); ii) selecting a first time at which the air temperature inside the first tire (3a) is assumed to be equal to the ambient temperature $T_{amb}$; iii) obtaining a pressure reading $P_{a1}$ for the first tire (3a) at the first time; iv) obtaining a pressure reading $P_{a2}$ for the first tire (3a) at a second, later, time; v) obtaining a pressure reading $P_{b2}$ for a second tire (3b) at the second time; vi) computing a temperature normalised pressure value $P_{b2n}$ for the second tire (3b) at the second time wherein

$$P_{b2n} \propto \frac{P_{b2}P_{a1}}{P_{a2}T_{amb}} \; ;$$

and
vii) determining if an air loss is present in the second tire (3b) based on the computed temperature normalised pressure value $P_{b2n}$, and providing an output if it is determined that an air loss is present.

Fig. 4

**Description**

Technical Field

The present invention relates to detecting air loss in tires of a vehicle, in particular to a computer implemented method for detecting air loss in tires of a vehicle, and to a computer system configured to perform a computer implemented method for detecting air loss in tires of a vehicle.

Background

Being able to detect an air loss in a vehicle tire, which may be associated with a puncture, is important for the safety of the vehicle. Accurate measurements of tire air pressures can be obtained using Tire Monitoring System (TMS) sensors.

TMS sensors are used to monitor some parameters of the tire itself, such as the tire air pressure and the tire air temperature.

Most fluctuations in measured tire air pressure are due to changes in the temperature of the tire and the air inside it. These fluctuations are undesirable when looking for potential air loss events. Some current pressure loss detection methods normalise the air pressure in the tires of a vehicle by taking temperature readings alongside the pressure readings, and dividing the pressure readings by the temperature readings, to remove the temperature dependence.

Summary of the Invention

According to a first aspect, there is provided a computer implemented method for detecting air loss in tires of a vehicle, the method comprising:

i) estimating an ambient temperature $T_{amb}$ at the vehicle

ii) selecting a first time at which the air temperature inside a first tire on the vehicle is assumed to be equal to the ambient temperature $T_{amb}$

iii) obtaining a pressure reading $P_{a1}$ for the first tire at the first time;

iv) obtaining a pressure reading $P_{a2}$ for the first tire at a second, later, time;

v) obtaining a pressure reading $P_{b2}$ for a second tire on the vehicle at the second time;

vi) computing a temperature normalised pressure value $P_{b2n}$ for the second tire at the second time based on the pressure reading $P_{a1}$ for the first tire at the first time, the pressure reading $P_{a2}$ for the first tire at the second time, the pressure reading $P_{b2}$ for the second tire at the second time, and the estimated ambient temperature $T_{amb}$, wherein

$$P_{b2n} \propto \frac{P_{b2}P_{a1}}{P_{a2}T_{amb}} \; ;$$

and

vii) determining if an air loss is present in the second tire based on the computed temperature normalised pressure value $P_{b2n}$, and providing an output if it is determined that an air loss is present.

Although it is known to use air temperature readings to normalise tire air pressure readings, the Inventor has recognized that air temperature readings are not always accurate, and the accuracy of tire air temperature readings depends on the location of the temperature sensor meaning that even normalised air pressure values still contain anomalies. Further, air temperature readings may not be available at all, for example where vehicles do not comprise tire air temperature sensors, or where vehicles do not allow third party applications to access air temperature readings.

It will be appreciated by the person skilled in the art that by normalising air pressure values for one tire on a vehicle using pressure values from said tire, as well as pressure values from another tire on the vehicle based on the assumption that the temperature related pressure changes will have been the same for both tires, air pressure normalisation can be achieved without using tire air temperature readings. The errors introduced by inaccurate tire air temperature readings can therefore be avoided, and air pressure normalisation can be realised when no tire air temperature readings are available. This can result in normalised air pressure values which have fewer fluctuations, making it easier to detect genuine air losses.

It will be understood that the ambient temperature at the vehicle is the air temperature of the vehicle's surroundings.

The output could be provided by any suitable means. In embodiments, the method comprises indicating to a user (e.g. a driver and/or a fleet manager) via an audio/visual alarm, a dashboard alert, or an alert displayed on a driver's mobile phone app that an air loss has been detected.

In embodiments $P_{b2n} = \dfrac{P_{b2} P_{a1}}{P_{a2} T_{amb}}$ .

In embodiments, determining if an air loss is present in the second tire comprises comparing the computed temperature normalised pressure value $P_{b2n}$ to a predetermined threshold normalised pressure value, and determining that air loss is present in the second tire if the computed temperature normalised pressure value $P_{b2n}$ is lower than the predetermined threshold normalised pressure value. In such embodiments, the threshold value may be normalised to the same temperature as the computed temperature normalised pressure value $P_{b2n}$. For example, both the computed temperature normalised pressure value $P_{b2n}$ and the predetermined threshold normalised pressure value may be normalised at the ambient temperature $T_{amb}$.

In embodiments, the method comprises repeating steps (iv) to (vi) at a plurality of second times to generate a time-series of normalised pressure values for the second tire; and analysing the time-series of normalised pressure values to determine if an air loss is present in the second tire. In embodiments, the plurality of second times may be every 1 minute, every 2 minutes, every 3 minutes, every 4 minutes, or every 5 minutes. In embodiments, edge processing (e.g. by a network communication device) of the pressure values may be performed. In such embodiments, the plurality of second times may be more frequent, e.g. every 1 minute. By generating a time-series of normalised pressure values, air losses can be detected by analysing trends in the time-series rather than the absolute value of single normalised pressure values. Erroneous air loss determinations may therefore be reduced.

In embodiments, analysing the time-series of normalised pressure values to determine if an air loss is present comprises determining whether the normalised pressure values for the second tire are staying constant, trending upwards (e.g. increasing) or trending downwards (e.g. decreasing).

In embodiments, determining that the normalised pressure values for the second tire are trending upwards (e.g. increasing) or trending downwards (e.g. decreasing) comprises determining that the temperature normalised pressure value has increased or decreased respectively for a predetermined number of consecutive values within the time series. The minimum predetermined number of consecutive values may be 2. In embodiments, the minimum predetermined number of consecutive values may be set to a number greater than 2 (e.g. 3). Setting the minimum predetermined number higher may reduce the risk of erroneous air loss detections. However, setting the minimum predetermined number too high may reduce the sensitivity of the method.

If it is determined that the normalised pressure values for the second tire are trending downwards, then it will be determined that an air loss is present in the second tire.

In embodiments, if it is determined that the normalised pressure values for the second tire are trending upwards, it may be determined that an air loss is present in the first tire. When the vehicle is undertaking a trip, the amount of air inside the tire will not increase, and as such, the normalised pressure values for the second tire should not increase. The relationship relied upon in step vi of the method relies on an assumption that an air loss is not present in the first tire. Therefore, if the normalised pressure values are nonetheless increasing, it may be indicative of that assumption being invalid, and thus of a pressure loss in the first tire

In embodiments, the method comprises calculating a pressure loss rate using the time-series of normalised pressure values and using the calculated pressure loss rate to estimate an amount of time remaining until the tire pressure reaches a critical value, wherein the output comprises the estimated amount of time remaining. The output may be provided to a driver of the vehicle and/or to a fleet manager responsible for the vehicle. In embodiments, the critical value may be set at a percentage of the recommended inflation pressure of the tire, e.g. 70%, 60%, 50%, 40%. The critical pressure value may be normalised to the same temperature as the computed temperature normalised pressure values $P_{b2n}$. For example, both the computed temperature normalised pressure value $P_{b2n}$ and the critical pressure value may be normalised at the ambient temperature $T_{amb}$. Informing a driver of the time remaining until the tire pressure reaches a critical value may enable the driver to act accordingly. In the case of a slow-leak, the driver may be able to continue to their destination. In the case of a faster leak, where the time remaining is short, the driver may instead drive towards a service centre. Informing a fleet manager of the time remaining until the tire pressure reaches a critical value may enable the fleet manager to act accordingly. For example, the fleet manager may re-route the vehicle, or avoid assigning further tasks to the vehicle.

In embodiments the output comprises instructions to a driver of the vehicle. These instructions may be to drive to a suitable (e.g. the nearest) service centre. The output may further comprise directions to a suitable (e.g. the nearest) service centre.

Any of the discussed outputs may be provided on a pressure loss indication unit, which may be a discrete device provided expressly for the purpose of air loss indication (e.g. located inside the vehicle) or may be a pre-existing device (e.g. a mobile phone, tablet, or computer) with a suitable application running thereon.

In embodiments, the first and second tires are on the same axle. The methods disclosed herein operate on the assumption that both the first and the second tire have been subjected to the same or similar conditions. One condition which has an effect on the amount by which the air temperature inside a tire will change is the load which is exerted on that tire. Tires on the same axle will typically be subject to the same loading conditions and so the first and second tires being on the same axle may increase the accuracy of the normalisation. This advantage may be realised particularly in goods vehicles, where the loading conditions may be considerably different between the axles of the vehicle. Another condition which may have an effect on temperature change is whether or not the tire is on a steering axle, since steering axle tires may be subjected to more friction than non-steering tires.

In embodiments, the first and second tires are tires on the same axle, and the two tires are in mirrored positions on the axle. For example, where 4 tires are mounted on an axle, each side of the axle may have an outer tire and an inner tire. The first and second tire may therefore be the inner tires on each side of the axle, or the outer tires on each side of the axle.

In embodiments, the method is repeated for different pairs of tires on the vehicle.

In embodiments, the method comprises obtaining a pressure reading $P_{b1}$ for the second tire on the vehicle at the first time, computing a difference between the pressure reading $P_{a1}$ for the first tire on the vehicle at the first time and the pressure reading $P_{b1}$ for the second tire on the vehicle at the first time, and proceeding with the method only if the difference is lower than a predetermined threshold. The predetermined threshold value may be less than or equal to 1 bar, 0.75 bar, 0.5 bar, 0.4 bar, or 0.3 bar. Checking that the starting pressures of the two tires are similar may increase the accuracy of the normalisation.

In embodiments, selecting the first time comprises determining that the vehicle is starting a trip. In embodiments, the start of a trip is determined by monitoring when the vehicle is powered on. This may be achieved through voltage sensing. In other embodiments, the start of a trip is determined by monitoring when the vehicle moves. Movement of the vehicle may be monitored using location data (e.g. GPS data) and/or using accelerometer data which may be obtained from OBD/CAN/FMS data.

In embodiments, selecting the first time comprises determining a length of time for which the vehicle has been stationary, comparing said length of time to a predetermined threshold, and selecting a time as the first time if the length of time for which the vehicle has been stationary is greater than the threshold. The predetermined threshold may be less than or equal to 10 hours, 8 hours, 6 hours, 4 hours. In embodiments, the threshold may be 3 hours. When the vehicle is stationary after completing a trip in which the air temperature inside it's tire has increased, the air temperature inside its tires will decrease again until the air temperature inside the tires is equal to the ambient temperature at the vehicle. Therefore, by checking that the vehicle has been stationary for a sufficiently long period of time, it can be more safely assumed that the air temperature inside the tires of the vehicle is equal to the ambient temperature. As such, the accuracy of the normalisation may be increased.

In embodiments, estimating the ambient temperature comprises measuring the ambient temperature of the vehicle's surroundings at the first time. In embodiments, the vehicle may comprise an external temperature sensor. In such embodiments, external temperature data may be contained in OBD/CAN/FMS data and obtained as part of the method.

In embodiments, estimating the ambient temperature may comprise obtaining local weather data. In such embodiments, the method may comprise determining a location of the vehicle (e.g. from GPS data) and estimating the ambient temperature based on a current weather report for that location.

In embodiments, the ambient temperature may be estimated based on the season and geographical location of the vehicle. For example, the vehicle may be known to be operating in Southern Europe in the winter and as such, the ambient temperature may be estimated to be 16 degrees Celsius.

In embodiments, no measured temperature data indicative of the temperature of the first and/or second tires at the second time is used to compute the temperature normalised pressure value $P_{b2n}$, (e.g. no TMS temperature data is used) (e.g. no measured temperature other than any temperature data which is used to estimate the ambient temperature is used). The errors introduced by inaccurate tire air temperature readings can therefore be avoided, and air pressure normalisation can be realised when no tire air temperature readings are available. This can result in normalised air pressure values which have fewer fluctuations, making it easier to detect genuine air losses.

In embodiments, the method further comprises:

viii) obtaining a pressure reading $P_{b1}$ for the second tire on the vehicle at the first time;

ix) calculating a temperature normalised pressure value $P_{a2n}$ for the first tire at the second time based on the pressure reading $P_{b1}$ for the first tire at the first time, the pressure reading $P_{a2}$ for the first tire at the second time, the pressure reading $P_{b2}$ for the second tire at the second time, and the estimated ambient temperature $T_{amb}$ wherein

$$P_{a2n} \propto \frac{P_{a2}P_{b1}}{P_{b2}T_{amb}} \; ;$$

and

x) determining if an air loss is present in the first tire based on the computed temperature normalised pressure value $P_{a2n}$, and providing an output if it is determined that an air loss is present.

In embodiments, $P_{a2n} = \dfrac{P_{a2}P_{b1}}{P_{b2}T_{amb}}$.

It will be understood that the above features discussed in relation to calculating a temperature normalised pressure value $P_{a2n}$ for the second tire and providing an output are applicable *mutatis mutandis* to calculating a temperature normalised pressure value $P_{a2n}$ for the first tire and providing an output.

According to a second aspect, there is provided a computer system configured to perform a computer implemented method for detecting air loss in tires of a vehicle, wherein the computer system is configured to:

i) estimate an ambient temperature $T_{amb}$ at the vehicle;
ii) select a first time at which the air temperature inside a first tire on the vehicle is assumed to be equal to the ambient temperature $T_{amb}$;
iii) obtain a pressure reading $P_{a1}$ for the first tire at the first time;
iv) obtain a pressure reading $P_{a2}$ for the first tire at a second, later, time;
v) obtain a pressure reading $P_{b2}$ for a second tire on the vehicle at the second time;
vi) compute a temperature normalised pressure value $P_{b2n}$ for the second tire at the second time based on the pressure reading $P_{a1}$ for the first tire at the first time, the pressure reading $P_{a2}$ for the first tire at the second time, the pressure reading $P_{b2}$ for the second tire at the second time, and the estimated ambient temperature $T_{amb}$, wherein

$$P_{b2n} \propto \frac{P_{b2}P_{a1}}{P_{a2}T_{amb}} ;$$

and
vii) determine if an air loss is present in the second tire based on the computed temperature normalised pressure value $P_{b2n}$ and provide an output if it is determined that an air loss is present.

It will be appreciated that this aspect may include one or more (e.g. all) of the features disclosed herein, e.g. relating to other aspects and embodiments, as applicable.

According to a third aspect, there is provided a computer program product comprising instructions which, when the program is executed by a computer, cause the computer to perform the method of the first aspect.

According to a fourth aspect of the invention, there is provided a system for detecting air loss in tires of a vehicle, the system comprising:

a first air pressure sensor configured to measure an air pressure of a first tire mounted on the vehicle;
a second air pressure sensor configured to measure an air pressure of a second tire mounted on the vehicle; and
a processor configured to perform the method of the first aspect, wherein the pressure readings are obtained from the first air pressure sensor and the second air pressure sensor.

In embodiments, the system comprises an air loss indication unit configured to output that an air loss in the vehicle tire has been detected. The air loss indication unit may be a discrete device provided expressly for the purpose of air loss indication (e.g. located inside the vehicle) or may be a pre-existing device (e.g. a mobile phone, tablet, or computer) with a suitable application running thereon.

In embodiments, the system comprises a vehicle device which is located in the vehicle, comprising the processor. In embodiments, the vehicle device may be configured to receive the pressure readings from the first and second pressure sensors via obtaining OBD/FMS/CAN data from the vehicle. The vehicle device may be plugged into a port of the vehicle such as an OBD port, FMS port, or other, or may communicate wirelessly with the vehicle. In embodiments, the first and second pressure sensors may be configured to communicate directly with the vehicle device via any suitable form of short-range wireless communication, or a wired connection. In embodiments, the first and second pressure sensors may communicate with the vehicle device via a Bluetooth® connection

In embodiments, the system comprises a remote (e.g. cloud-based) server comprising the processor. The remote server may be arranged to receive (e.g. via wireless transmission) the pressure readings from the first and second pressure sensors (e.g. via a network communication device located in the vehicle). Multiple network communication devices located in multiple vehicles may report their readings to the same remote server, e.g. as part of a fleet management system.

Brief Description of the Drawings

One or more non-limiting examples will now be described, by way of example only, and with reference to the accompanying figures in which:

Figure 1 schematically illustrates a system capable of performing the method disclosed herein;
Figure 2 schematically illustrates another system capable of performing the methods disclosed herein;
Figure 3 schematically illustrates the underside of a vehicle;
Figure 4 is a flow chart illustrating a method for determining air loss in vehicle tires;
Figures 5a-c show outputs which may be produced by the method of Figure 4;
Figure 6 is a plot of pressure and temperature against time showing conventionally normalised pressure;
Figure 7 is a plot of pressure and temperature against time showing pressure normalised according to the methods disclosed herein;
Figure 8 is a plot showing a comparison between the normalised pressure from Figure 6, and the normalised pressure from Figure 7.

Detailed Description

As used herein, the terms "comprise", "comprising", "comprises", "include", "including", "includes", "have", "has", "having", or variants thereof are open-ended, and include one or more stated features, integers, elements, steps, components, or functions but does not preclude the presence or addition of one or more other features, integers, elements, steps, components, functions, or groups thereof. When an element is referred to as being "connected", "coupled", "responsive", or variants thereof to another element, it can be directly connected, coupled, or responsive to the other element or intervening element(s) may be present. For example, an intervening element B may connect element A to element C. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items. Furthermore, to the extent that the term "or" is employed (e.g., A or B) it is intended to mean "A or B or both." When "only A or B but not both" is intended, then the term "only A or B but not both" will be employed. Thus, use of the term "or" herein is the inclusive, and not the exclusive use.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

The dimensions of elements in the drawings may be exaggerated for the sake of clarity. Further, it will be understood that when an element is referred to as being "on" another element, the element may be directly on the other element, or there may be an intervening element therebetween. Moreover, terms such as "top," "bottom," "upper," "lower," "above," "below," and the like are used herein to describe the relative positions of elements or features as shown in the figures. For example, when an upper part of a drawing is referred to as a "top" and a lower part of a drawing is referred to as a "bottom" for the sake of convenience, in practice, the "top" may also be called a "bottom" and the "bottom" may also be a "top" without departing from the teachings of the inventive concept (e.g., if the structure is rotated 180 degrees relative to the orientation of the figure).

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). The computer program products may, for example, be provided as one or more modules of a software product encoded in an electrical, optical, or electromagnetic signal, for transmission to suitable receiver apparatus for execution by a data processing apparatus, e.g., downloadable over the internet.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Computer program instructions may also be stored in a non-transitory tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. The term "non-transitory tangible computer-readable medium" includes semiconductor memory devices, e.g., ROM (read only memory) EPROM (electrically erasable programmable read only memory), EEPROM (electrically erasable programmable read only memory), and flash memory devices; magnetic disks, e.g., internal hard disks or removable disks; magneto optical disks; and CD ROM and DVD-ROM disks. The term "non-transitory tangible computer-readable medium" is also intended to encompass types of storage devices that do not necessarily store information permanently, including for example, RAM (random-access memory), SRAM (static random-access memory), DRAM (dynamic random-access memory), and the like. Accordingly, embodiments of present inventive concepts may be embodied in hardware and/or in software (including firmware, resident software, micro-code, etc.) that runs on a processor (also referred to as a controller) such as a digital signal processor, which may collectively be referred to as "circuitry," "a module" or variants thereof. These terms, as well as the terms "component," "engine," "system," "apparatus," "interface," or the like, are generally intended to refer to a computer-related entity, either hardware (computing apparatus element(s)), a combination of hardware and software, or software only. For example, a component may be, but is not limited to being, a process running on a processor, a processor, an object, an executable, a thread of execution, a program, and/or a computer. By way of illustration, the term "component" may refer to an application running on a controller, or a combination of the application and the controller itself. One or more components may reside within a process and/or thread of execution and a component may be localized on one computer and/or distributed between two or more computers. The software may be in any programming language.

Embodiments of the subject matter described in this specification can be implemented in a computing system having one or more apparatus components, in one or more corresponding locations. The apparatus components may include a data server (or other back-end component) and may include one or more user devices (e.g. client computer(s)) having a user interface (e.g. graphical user interface, GUI) by which a user can interact with the computer system. In the case that the apparatus components of the system are in different locations, they may be interconnected by any form of digital data communication network, and, except when indicated otherwise, their collective functionality may be achieved by partitioning a computing process between the apparatus components of a computer system in any way. Examples of wired communication networks include a wired local area network ("LAN") and a wired wide area network ("WAN"), e.g., the Internet, which need not be co-owned with the rest of the computer system. Examples of wireless communication networks include wireless LANs (including Wi-Fi (Wireless Fidelity)), and their communication standards include LTE (Long Term Evolution), 4G (4th generation), or 5G (5th generation). In addition, there is LPWA (Low Power Wide Area) as a communication standard that enables wide-range communication with power saving, and BLE (Bluetooth Low Energy) including Bluetooth that is power saving and suitable for short distances. The client computers may comprise mobile devices (such as laptops, tablets, personal digital assistants (PDAs) and mobile phones).

In some cases, the computing system can include clients (e.g. client computer(s)) and servers. A client and server may be remote from each other and typically interact through a communication network. The client and server may run respective software which defines the client-server relationship.

A computer system being "configured" to perform particular operation(s) or action(s) means that the system has installed on its software, firmware, hardware, or a combination of them that in operation cause the system to perform the operations or actions. One or more computer programs being "configured" to perform particular operations or actions means that the one or more programs include instructions that, when executed by data processing apparatus, cause the apparatus to perform the operations or actions.

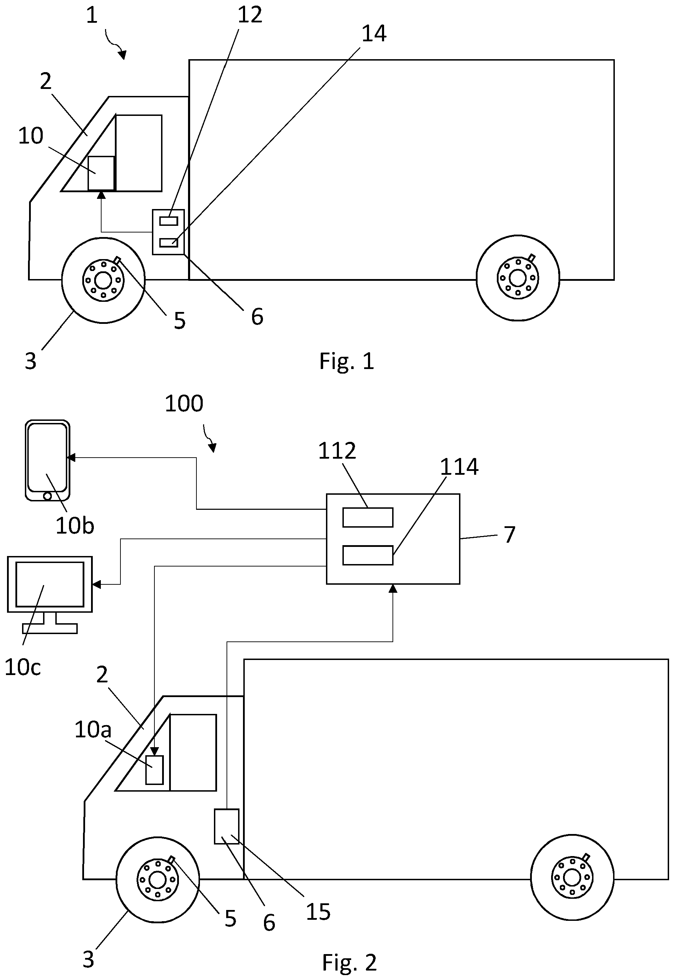

Figure 1 shows a system 1 for detecting an air loss in a vehicle tire 3 mounted on a vehicle 2. The system 1 comprises a plurality of tire monitoring system (TMS) sensors 5, each mounted on a wheel of the vehicle 2. The system 1 of Figure 1 also comprises a vehicle device 6 in the vehicle 2 which is configured to obtain tire pressure data from the TMS sensors 5. In embodiments, the vehicle device 6 may be configured to obtain tire pressure data from the TMS sensors 5 via obtaining OBD/FMS/CAN data from the vehicle 2. The vehicle device 6 may be plugged into a port of the vehicle 2 such as an OBD port, FMS port, or other, or may communicate wirelessly with the vehicle 2. In this example the TMS sensors 5 provide OBD data which is then received by the vehicle device 6 from the vehicle 2 but it will be understood that any suitable form of short-range wireless communication, or a wired connection, may be used. For example, the TMS sensors may communicate with the vehicle device 6 via a Bluetooth® connection. In the system 1 of Figure 1, the vehicle device 6 is configured to perform processing of the tire pressure data, and as such comprises a processor 12 and memory 14. The vehicle device 6 is connected to an air loss indication unit 10 inside the cabin of the vehicle 2. The air loss indication unit 10 is configured to provide an output when an air loss is determined. In embodiments, the air loss indication unit 10 may be provided as part of the vehicle device 6 itself (i.e. the air loss indication unit 10 and vehicle device 6 may be unitary).

Figure 2 schematically illustrates another system 100 for detecting an air loss event in a vehicle tire 3 mounted on a vehicle 2. The system 1 comprises a plurality of tire monitoring system (TMS) sensors 5, each being mounted on a wheel of the vehicle 2. The system 100 of Figure 2 differs from the system 1 of Figure 1 in that the system 100 comprises a remote server 7 which is configured to perform processing of the tire pressure data. As such, the remote server comprises a processor 112 and a memory 114. The system 100 of Figure 2 also comprises a vehicle device 6, which in this embodiment is a network communication device 15 provided in the vehicle 2. In embodiments, the network communication device 15 may be configured to obtain tire pressure data from the TMS sensors 5 via obtaining OBD/FMS/CAN data from the vehicle 2. The network communication device 15 may be plugged into a port of the vehicle 2 such as an OBD port, FMS port, or other, or may communicate wirelessly with the vehicle 2. In this example the TMS sensors 5 provide OBD data which is then received by network communication device 15 from the vehicle 2 but it will be understood that any suitable form of short-range wireless communication, or a wired connection, may be used. For example, the TMS sensors may communicate directly with the network communication device 15 via a Bluetooth® connection. In embodiments, the network communication device 15 may be a permanently installed transceiver box. The network communication device 15 is networked and communicates via a wireless network connection (e.g. cellular network) to the remote server 7. In the illustrated embodiment, a plurality of air loss indication units 10 are provided. The remote server 7 is connected, via the wireless network, to an air loss indication unit 10a inside the cabin of the vehicle 2, a driver's mobile device 10b, and a fleet manager's computer 10c.

It will be understood that in the system 1 of Figure 1, since the processing is carried out by the vehicle device 6 itself, the system does not need to communicate with a remote server 7. In the system 100 of Figure 2 however, the TMS units 5 communicate (via the network communication device 15) with the remote server 7. Since the remote server 7 includes a memory 112 and processor 114, processing is carried out at the remote server 7. In embodiments, the network communication device 15 of the system 100 according to Figure 2 may still have a processor and memory, and processing may be shared between the server 7 and the network communication device 15. For example, the network communication device 15 may perform edge processing.

Both system 1 of Figure 1, and system 100 of Figure 2 are capable of performing the methods discussed herein.

The vehicle 2 shown in Figure 1 and Figure 2 is a light goods vehicle (LGV) although it will be understood that the disclosed method is applicable to any suitable vehicle, including but not limited to, passenger cars, minibuses, buses, coaches and heavy goods vehicles (HGVs).

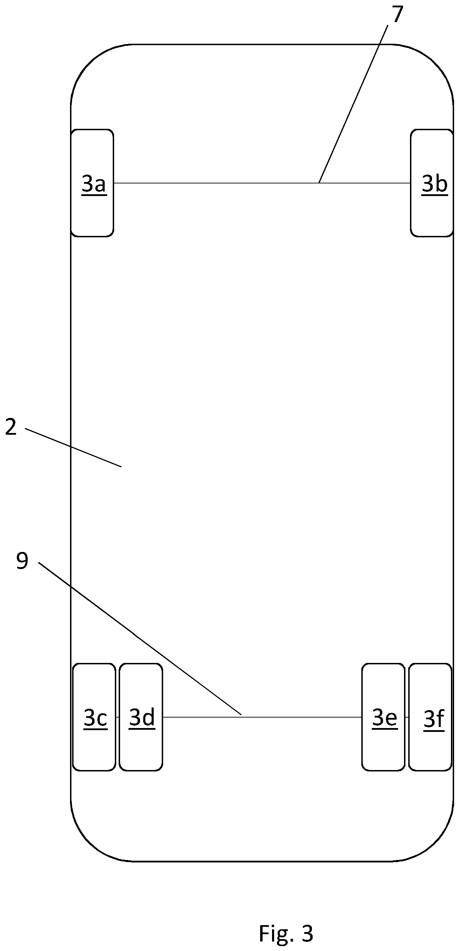

Figure 3 schematically illustrates an underside of the vehicle 2 such that the arrangement of tires 3 on the vehicle 2 can be seen. The vehicle 2 comprises a front axle 7 and a rear axle 9. Two wheels, and hence two tires 3a, 3b, are mounted on the front axle, and four wheels, and hence four tires 3c, 3d, 3e, 3f are mounted on the rear axle.

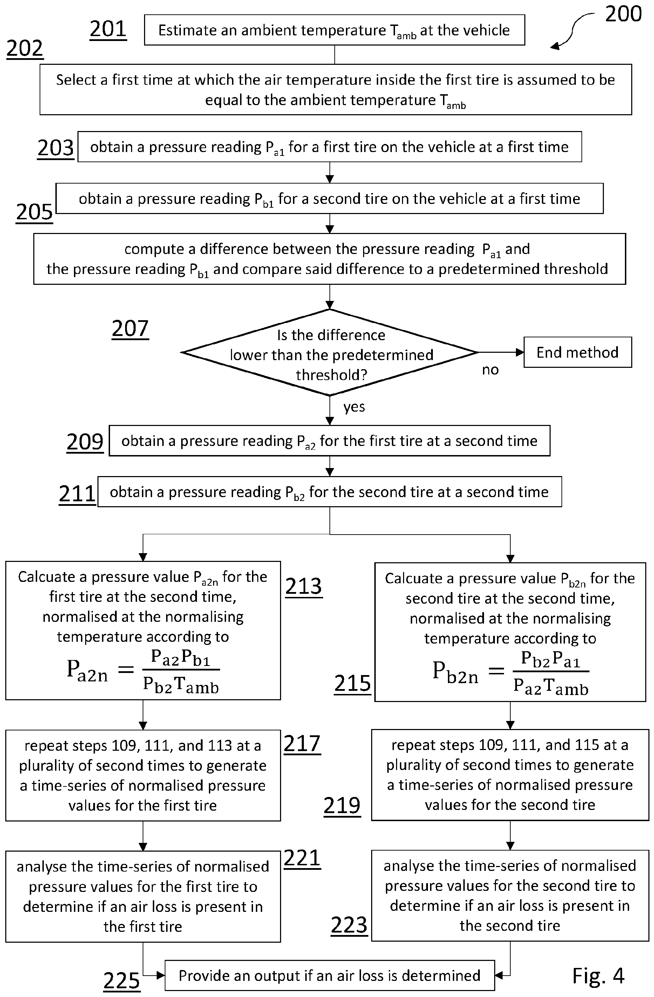

Figure 4 shows a flow chart illustrating a method 200 for detecting air loss in tires of a vehicle. In the below explanation of the method, the first tire is tire 3a, and the second tire is tire 3b.

At step 201, the ambient temperature $T_{amb}$ at the vehicle is estimated. It will be understood that the ambient temperature at the vehicle is the air temperature of the vehicle's surroundings. The ambient temperature estimation can be performed in a plurality of different ways. Many vehicles 2 comprise external temperature sensors, and external temperature data may be contained in OBD/CAN/FMS data. As such, in embodiments, step 201 may comprise estimating the ambient temperature at the vehicle based on external temperature data obtained from OBD/CAN/FMS data of the vehicle 2. In other embodiments, the system 1, 100 may comprise an external temperature sensor mounted on the vehicle and used to determine the ambient temperature. In embodiments, step 201 may comprise estimating the ambient temperature by obtaining local weather data. In such embodiments, step 201 may comprise determining a location of the vehicle 2 (e.g. from GPS data) and estimating the ambient temperature based on a current weather report for that location. In embodiments, step 201 may comprise estimating the ambient temperature based on the season and geographical location of the vehicle. For example, the vehicle 2 may be known to be operating in Southern Europe in the winter and as such, the ambient temperature may be estimated to be 16 degrees Celsius.

At step 202, a first time is selected. The first time is at the start of a trip of the vehicle 2, and therefore, step 202 comprises determining that the vehicle 2 is starting a trip. This determination can be performed in any suitable way. In embodiments, the start of a trip is determined by monitoring when the vehicle 2 is powered on. In other embodiments, the start of a trip is determined by monitoring when the vehicle moves. Movement of the vehicle 2 may be monitored using location data (e.g. GPS data) and/or using accelerometer data which may be obtained from OBD/CAN/FMS data. Once it has been determined that the vehicle 2 is starting a trip, step 202 further involves determining if the time is a first time at which the air temperature inside the first tire can be assumed to be equal to the ambient temperature $T_{amb}$. As a vehicle drives, the air temperature inside its tires will increase. When the vehicle is stationary, the air temperature inside its tires will decrease again until the air temperature inside the tires is equal to the ambient temperature at the vehicle. Therefore, if a vehicle has been stationary for a sufficiently long period of time, it can be assumed that the air temperature inside the tires of the vehicle is equal to the ambient temperature at the vehicle. In embodiments, step 202 comprises determining a length of time for which the vehicle 2 has been stationary, comparing said length of time to a predetermined threshold, and selecting the time as the first time if the length of time for which the vehicle has been stationary is greater than the threshold. In embodiments, the threshold is 3 hours.

At step 203, a pressure reading $P_{a1}$ is obtained for the first tire 3a at the first time, and at step 205, a pressure reading $P_{b1}$ is obtained for the second tire 3b at the first time.

At step 207, a difference between the pressure reading $P_{a1}$, and the pressure reading $P_{b1}$ is computed and compared to predetermined threshold to check that the difference is lower than the threshold. In embodiments, the predetermined threshold is set to 0.3 bar for passenger cars. In embodiments, the predetermined threshold is set to 0.5 bar for larger vehicles such as buses, coaches, light goods vehicles (LGVs) and heavy goods vehicles (HGVs). If the difference is greater than the threshold, then the method may not be as accurate, and so the method is ended. An error message may be output. If the difference is lower than the threshold, the method proceeds to step 209.

At step 209, a pressure reading $P_{a2}$ is obtained for the first tire 3a at a second later time, and at step 211, a pressure reading $P_{b2}$ is obtained for the second tire 3b at the second time.

The disclosed method operates on the assumption that if the first and the second tires have been exposed to the same conditions (e.g. same load, same frictional forces) then the temperature increase in the first tire will be equal to the temperature increase in the second tire. Further, since the temperature of the air inside both the first and the second tire was equal to the ambient temperature $T_{amb}$ at the first time, the temperature of the air inside the first tire at the second time should be equal to the temperature of the air inside the second tire at the second time.

By making these assumptions, the following derivation can be made, starting from the Ideal Gas Law:

$$PV \propto T$$

assuming V is constant:

$$\frac{P_{a1}}{T_{a1}} = \frac{P_{a2}}{T_{a2}}$$

and

$$\frac{P_{b1}}{T_{b1}} = \frac{P_{b2}}{T_{b2}}$$

Where $P_{a1}$ is the pressure inside the first tire at the first time, $T_{a1}$ is the air temperature inside the first tire at the first time, $P_{a2}$ is the pressure inside the first tire at the second time, $T_{a2}$ is the air temperature inside the first tire at the second time, $P_{b1}$ is the pressure inside the second tire at the first time, $T_{b1}$ is the air temperature inside the second tire at the first time, $P_{b2}$ is the pressure inside the second tire at the second time, and $T_{b2}$ is the air temperature inside the second tire at the second time.

If the first tire and the second tire were both at ambient temperature at the first time, and were subject to the same conditions between the first time and the second time then:

$$T_{a1} = T_{b1} = T_{amb}$$

and

$$T_{a2} = T_{b2} = T_2$$

where $T_{amb}$ is the ambient temperature at the vehicle at the first time, and $T_2$ is the air temperature inside the first and second tires at the second time.

Therefore:

$$\frac{P_{a1}}{T_{amb}} = \frac{P_{a2}}{T_2}$$

$$T_2 = \frac{P_{a2}T_{amb}}{P_{a1}}$$

$$P_{b2n} = \frac{P_{b2}}{T_2} = \frac{P_{b2}P_{a1}}{P_{a2}T_{amb}} \qquad\qquad Equation\ 1$$

and

$$P_{a2n} = \frac{P_{a2}}{T_2} = \frac{P_{a2}P_{b1}}{P_{b2}T_{amb}} \qquad\qquad Equation\ 2$$

Where $P_{b2n}$ is the normalised pressure value for the second tire at the second time, and $P_{a2n}$ is the normalised pressure value for the first tire at the second time.

At step 215, a normalised pressure value for the second tire at the second time is calculated according to equation 1.

At step 219, steps 209, 211, and 215 are repeated (e.g. continuously) at a plurality of second times to generate a time-series of normalised pressure values $P_{b2n}$ for the second tire. In embodiments, steps 209, 211, and 215 are repeated, e.g. every minute or once every 5 minutes. At step 223, the time-series of normalised pressure values for the second tire is analysed to determine if an air loss is present in the second tire.

Corresponding steps are performed for the first tire. As such, at step 213, a normalised pressure value for the first tire at the second time is calculated according to equation 2.

At step 217, steps 209, 211, and 213 are repeated (e.g. continuously) at a plurality of second times to generate a time-series of normalised pressure values $P_{a2n}$ for the first tire. In embodiments, steps 209, 211, and 215 are repeated, e.g. every minute or once every 5 minutes. At step 221, the time-series of normalised pressure values for the first tire is analysed to determine if an air loss is present in the first tire.

As part of steps 221 and 223, any suitable algorithm can be used to evaluate the normalised pressure values over time in order to determine if an air loss has occurred. Some exemplary algorithms are discussed briefly below but it should be understood that normalised air pressure values obtained according to the described embodiments could be used in any suitable algorithm for determining if an air loss has occurred. In the below explanations, normalised pressure values are generically referred to as $P_n$.

*Algorithm a)*

A basic check can be done by comparing the difference between the maximum and minimum values taken by $P_n$ within a time period with a suitable threshold:

$$\Delta P_n = \max(P_n) - \min(P_n) > P_{thr}$$

The $P_{thr}$ can be a predefined value or can be a self-learned value. For example, in the case of a self-learned value, $\Delta P_n(t_0)$ can be evaluated in the first few minutes starting at a certain time $t_0$ and then $P_{thr}$ can be created as a function of $\Delta P_n(t_0)$.

An air loss can be more reliably detected when the above inequality remains true for a certain amount of time.

*Algorithm b)*

An average value $P_{ref}$ of $P_n(t)$ can be evaluated over a set time period, and a reference threshold can be created as a function of $P_{ref}$.

When the relation $\Delta P_n(t) = |P_n(t) - P_{ref}| > P_{thr}$ a further check can be done to verify if the current $P_n$ is greater or lower than $P_{ref}$. In the latter case it is likely that an air loss associated with an air leak such as a puncture is present. The air loss can be more reliably detected when the above inequality remains true for a certain amount of time.

*Algorithm c)*

The trend of $P_n$ can be used as an indicator of an air loss. If the normalised pressure value is constantly decreasing over a period of time, then an air loss is likely. In embodiments, an air loss may be determined if the value of $P_n$ continues to decreases for a pre-set number of data points. The minimum number of pre-set data points may be 2. In embodiments, the pre-set number may be set to 3 (or higher) to reduce the risk of false detections.

Finally, at step 225, an output is provided if an air loss is determined. The output is provided on an air loss indication device 10, and may comprise an output to a driver of the vehicle 2, and/or to a fleet manager. The output may take any suitable form and may comprise only an indication that an air loss has been detected in the first tire or the second tire. In embodiments however, the method 200 may further comprise analysing the time series of normalised pressure values $P_n$ to estimate a pressure loss rate, determining, based on the current normalised pressure value, and the estimated pressure loss rate, a length of time before the tire pressure reaches a critical value, and providing an output which informs the driver how much time they have before the tire pressure reaches a critical value, and provides corresponding advice (e.g. drive to your nearest service centre). In embodiments, the critical value may be set at a percentage of the recommended inflation pressure of the tire, e.g. 60%. The critical pressure value is normalised to the same temperature as the computed temperature normalised pressure values $P_{b2n}$. In embodiments, both the computed temperature normalised pressure value $P_{b2n}$ and the critical pressure value may be normalised at the ambient temperature $T_{amb}$.

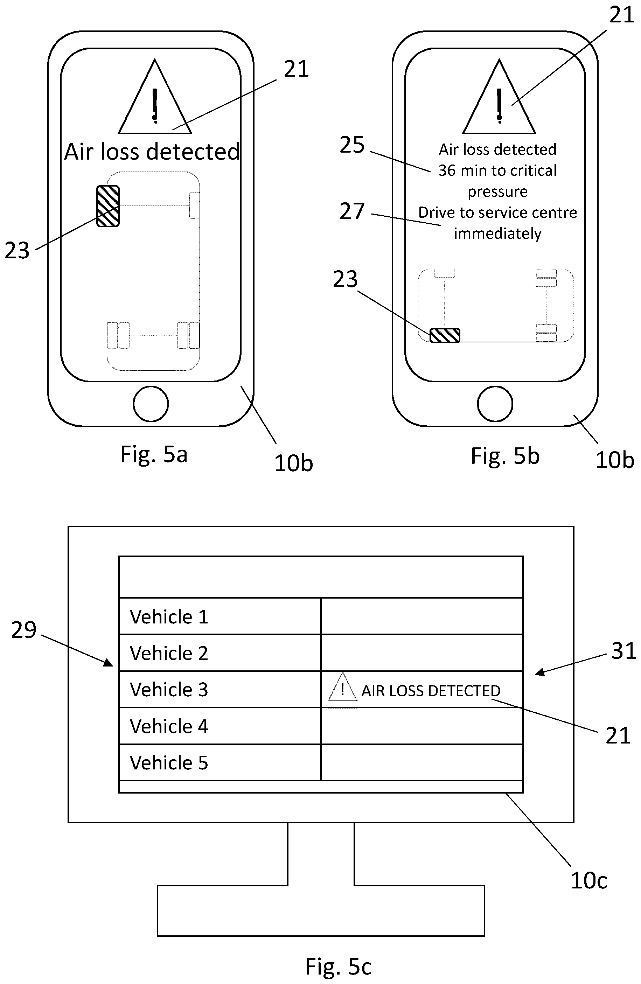

Example outputs are illustrated in Figures 5a, b, c.

Figure 5a illustrates a simple output on an air loss indication device comprising a driver's mobile device 10b. The output comprises a warning 21 that an air loss has been detected, and a graphic 23 illustrating on which tire the air loss has been detected. Figure 5b illustrates a more complex output, also on an air loss indication device comprising a driver's mobile device 10b. This output also comprises a warning 21 that an air loss has been detected, and a graphic 23 illustrating on which tire the air loss has been detected, but further comprises an indication 25 of the time remaining before the tire reaches a critical pressure, and an instruction 27, which in the illustrated embodiment is to drive to a service centre immediately. In embodiments, the driver may then be provided automatically with directions to a suitable (e.g. the nearest) service centre. Figure 5c illustrates an output on an air loss indication device comprising a fleet manager's terminal 10c. The fleet manager's terminal 10c shows a list 29 of vehicles for which the fleet manager is responsible, along with live status information 31 for those vehicles. In Figure 5c it can be seen that a warning 21 is present in the status information 31 for vehicle 3.

In the above explanation of the method 200, tires 3a and 3b, which are both on the front axle were used as the first and second tires respectively. It will be understood that the method 200 will be repeated for different pairs of tires on a vehicle such that every tire is assessed for air losses.

As explained in relation to the derivation of equations 1 and 2, the method operates on the assumption that both the first and the second tire have been subjected to the same conditions. One condition which has a large effect on the amount by which the air temperature inside a tire will increase is the load which is exerted on that tire. For lightweight vehicles with substantially constant weight distribution (such as passenger cars), the load exerted on all of the tires on the vehicle may be substantially the same, and as such, it may be possible to pair up any two tires on the vehicle in order to perform the method 200 of Figure 4. In goods vehicles however, such as the light goods vehicle 2 shown in Figures 1 and 2, the loading conditions may be considerably different between the axles of the vehicle. For example, if the vehicle 2 is carrying a particularly heavy load, then the load over the rear axle 9 will be greater than the load over the front axle 7, and so the tires on the rear axle will be subject to more load related temperature increase. Therefore, in some implementations, such as when the method is used for goods carrying vehicles, the first and second tires may be tires on the same axle. Where the first and second tires are tires on the same axle, the two tires will be in mirrored positions on the axle.

Taking the tire layout shown in Figure 3 as an example, the tires would be paired as follows for performing method 200:

> 3a - 3b
> 3c - 3f
> 3d - 3e

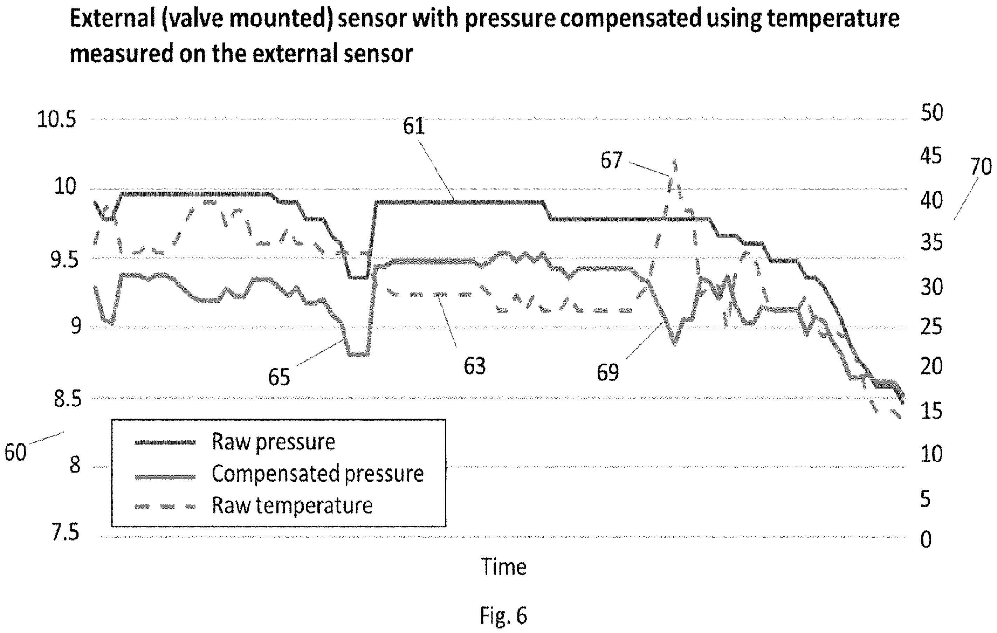

The advantages of the present method will now be explained with relation to the graphs of Figures 6 to 8.

Figure 6 is a plot of pressure (Bar) against time on one axis 60, and temperature (degrees Celcius) against time on the other axis 70. The data shown in Figure 6 was taken from a valve mounted TMS sensor which comprised both a pressure sensor and a temperature sensor. No air loss was present when the data illustrated in Figure 6 was being collected. Line 61 shows the raw pressure data, and line 63 shows the raw temperature data. Line 65 shows the temperature compensated pressure data, which is obtained by dividing the values in the raw pressure data by the values in the raw temperature data. It can be seen from Figure 6 that the temperature compensated pressure data still fluctuates considerably. In particular, a spike 67 in the raw temperature data 63 can be seen which is not matched by a spike in the raw pressure data 61. As such, this spike registers as a pressure decrease 69 in the temperature compensated pressure data 66. Such fluctuations make it difficult to accurately detect air loss events. The reason for these fluctuations is that, because the temperature sensor is valve mounted, it does not provide an accurate measurement of the air temperature inside the tire. This is because the temperature sensor is in contact with the wheel, and is close to the vehicle brakes. The temperature sensor may therefore introduce more errors into the normalised pressure values. One possible solution to this problem is to mount a temperature sensor inside the tire itself, but this is expensive, and may require bespoke tires to be used.

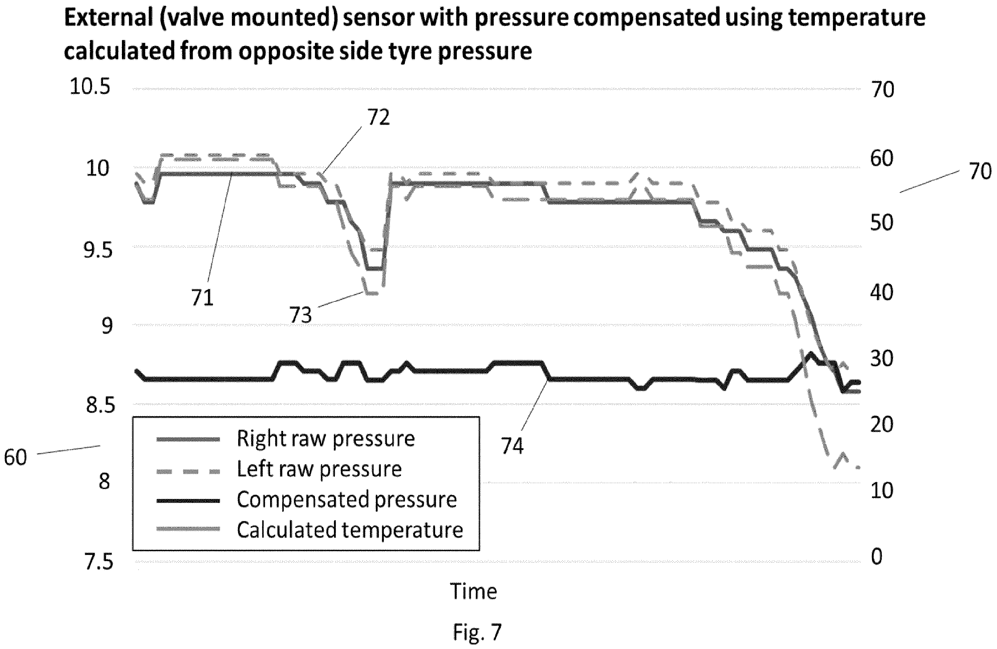

Figure 7 is another plot of pressure (Bar) against time on one axis 60, and temperature (degrees Celcius) against time on the other axis 70. Figure 7 shows pressure data which has been normalised using the method according to this disclosure. Line 71 shows the raw pressure data (again obtained from a valve mounted TMS unit) for the right-side tire, and line 72 shows the raw pressure data for the left side tire. Line 73 shows the calculated temperature $T_2$ which can be calculated as a part of the disclosed method. It can be seen from Figure 7 that this calculated temperature 73 tracks with the raw pressure values 71, 72 much more accurately than the measured temperature 65 in Figure 6 tracks with the raw pressure values 61. Line 74 shows the temperature compensated pressure for the right-side tire and it can be seen that the fluctuations have been significantly reduced. This reduction in fluctuations allows air loss events to be determined more accurately.

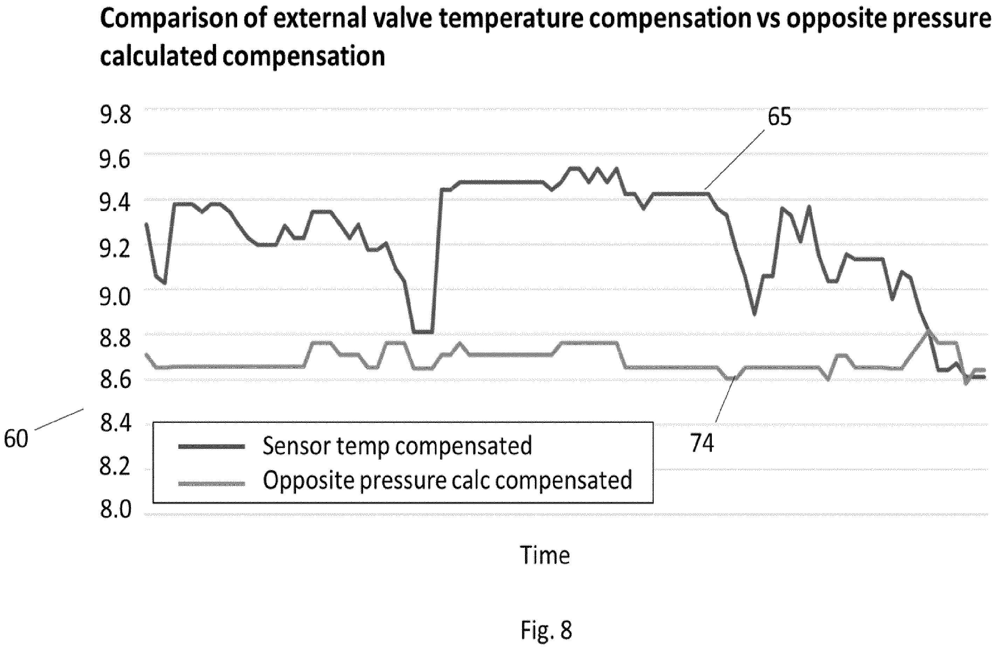

Figure 8 shows a direct comparison between the normalised pressure values 65 calculated using the measured temperature, and the normalised pressure values 74 calculated using the disclosed method. It can be seen in Figure 8 that the normalised pressure values 65 calculated using the measured temperature has around 1 Bar of variation, whereas the normalised pressure values 74 calculated using the disclosed method have only 0.2 Bar of variation.

In the above description of various embodiments of the present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which the present inventive concepts belong. It will be further understood that terms, such as those defined in commonly used dictionaries, should be interpreted as having a meaning that is consistent with their meaning in the context of this specification and the relevant art and will not be interpreted in an idealised or overly formal sense unless expressly so defined herein.

Many variations and modifications can be made to the embodiments without substantially departing from the principles of the present inventive concepts. All such variations and modifications are intended to be included herein within the scope of the present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of the present inventive concepts are to be determined by the broadest permissible interpretation of the present disclosure including the following claims and their equivalents, and shall not be restricted or limited by the foregoing detailed description.

**Claims**

1.  A computer implemented method for detecting air loss in tires of a vehicle, the method comprising:

    i) estimating an ambient temperature $T_{amb}$ at the vehicle;
    ii) selecting a first time at which the air temperature inside a first tire on the vehicle is assumed to be equal to the ambient temperature $T_{amb}$
    iii) obtaining a pressure reading $P_{a1}$ for the first tire at the first time;
    iv) obtaining a pressure reading $P_{a2}$ for the first tire at a second, later, time;
    v) obtaining a pressure reading $P_{b2}$ for a second tire on the vehicle at the second time;
    vi) computing a temperature normalised pressure value $P_{b2n}$ for the second tire at the second time based on the pressure reading $P_{a1}$ for the first tire at the first time, the pressure reading $P_{a2}$ for the first tire at the second time, the pressure reading $P_{b2}$ for the second tire at the second time, and the estimated ambient temperature $T_{amb}$, wherein

$$P_{b2n} \propto \frac{P_{b2}P_{a1}}{P_{a2}T_{amb}} \; ;$$

and

vii) determining if an air loss is present in the second tire based on the computed temperature normalised pressure value $P_{b2n}$, and providing an output if it is determined that an air loss is present.

2. The method of claim 1 comprising repeating steps (iv) to (vi) at a plurality of second times to generate a time-series of normalised pressure values for the second tire; and
analysing the time-series of normalised pressure values to determine if an air loss is present in the second tire.

3. The method of claim 2, wherein analysing the time-series of normalised pressure values to determine if an air loss is present comprises determining whether the normalised pressure values for the second tire are staying constant, trending upwards or trending downwards.

4. The method of claim 3 wherein determining that the normalised pressure values for the second tire are trending upwards or trending downwards comprises determining that the temperature normalised pressure value has increased or decreased respectively for a predetermined number of consecutive values within the time series.

5. The method of claim 3 or claim 4, comprising calculating a pressure loss rate using the time-series of normalised pressure values and using the calculated pressure loss rate to estimate an amount of time remaining until the tire pressure reaches a critical value, wherein the output comprises the estimated amount of time remaining.

6. The method of any preceding claim wherein the output comprises instructions to a driver of the vehicle.

7. The method of any preceding claim, wherein the first and second tires are on the same axle.

8. The method of any preceding claim, comprising obtaining a pressure reading $P_{b1}$ for the second tire on the vehicle at the first time, computing a difference between the pressure reading $P_{a1}$ for the first tire on the vehicle at the first time and the pressure reading $P_{b1}$ for the second tire on the vehicle at the first time, and proceeding with the method only if the difference is lower than a predetermined threshold.

9. The method of any preceding claim, wherein selecting the first time comprises determining that the vehicle is starting a trip.

10. The method of claim 9, wherein selecting the first time comprises determining a length of time for which the vehicle has been stationary, comparing said length of time to a predetermined threshold, and selecting a time as the first time if the length of time for which the vehicle has been stationary is greater than the threshold.

11. The method of any preceding claim wherein estimating the ambient temperature comprises measuring the ambient temperature of the vehicle's surroundings at the first time.

12. The method of any preceding claim, wherein no measured temperature data indicative of the temperature of the first and/or second tires at the second time is used to compute the temperature normalised pressure value $P_{b2n}$.

13. The method of any preceding claim, further comprising:

viii) obtaining a pressure reading $P_{b1}$ for the second tire on the vehicle at the first time;
ix) calculating a temperature normalised pressure value $P_{a2n}$ for the first tire at the second time based on the pressure reading $P_{b1}$ for the first tire at the first time, the pressure reading $P_{a2}$ for the first tire at the second time, the pressure reading $P_{b2}$ for the second tire at the second time, and the estimated ambient temperature $T_{amb}$ wherein

$$P_{a2n} \propto \frac{P_{a2}P_{b1}}{P_{b2}T_{amb}} \; ;$$

and
x) determining if an air loss is present in the first tire based on the computed temperature normalised pressure value $P_{a2n}$, and providing an output if it is determined that an air loss is present.

14. A computer system configured to perform a computer implemented method for detecting air loss in tires of a vehicle, wherein the computer system is configured to:

  i) estimate an ambient temperature $T_{amb}$ at the vehicle;
  ii) select a first time at which the air temperature inside a first tire on the vehicle is assumed to be equal to the ambient temperature $T_{amb}$;
  iii) obtain a pressure reading $P_{a1}$ for the first tire at the first time;
  iv) obtain a pressure reading $P_{a2}$ for the first tire at a second, later, time;
  v) obtain a pressure reading $P_{b2}$ for a second tire on the vehicle at the second time;
  vi) compute a temperature normalised pressure value $P_{b2n}$ for the second tire at the second time based on the pressure reading $P_{a1}$ for the first tire at the first time, the pressure reading $P_{a2}$ for the first tire at the second time, the pressure reading $P_{b2}$ for the second tire at the second time, and the estimated ambient temperature $T_{amb}$, wherein

$$P_{b2n} \propto \frac{P_{b2}P_{a1}}{P_{a2}T_{amb}} ;$$

  and
  vii) determine if an air loss is present in the second tire based on the computed temperature normalised pressure value $P_{b2n}$ and provide an output if it is determined that an air loss is present.

15. A computer program comprising instructions which, when the program is executed by a computer, cause the computer to perform the method of any of claims 1 to 14.

Fig. 1

Fig. 2

7

3a

3b

2

9

3c 3d

3e 3f

Fig. 3

**201** Estimate an ambient temperature $T_{amb}$ at the vehicle

**200**

**202** Select a first time at which the air temperature inside the first tire is assumed to be equal to the ambient temperature $T_{amb}$

**203** obtain a pressure reading $P_{a1}$ for a first tire on the vehicle at a first time

**205** obtain a pressure reading $P_{b1}$ for a second tire on the vehicle at a first time

compute a difference between the pressure reading $P_{a1}$ and the pressure reading $P_{b1}$ and compare said difference to a predetermined threshold

**207** Is the difference lower than the predetermined threshold?

no → End method

yes

**209** obtain a pressure reading $P_{a2}$ for the first tire at a second time

**211** obtain a pressure reading $P_{b2}$ for the second tire at a second time

**213** Calcuate a pressure value $P_{a2n}$ for the first tire at the second time, normalised at the normalising temperature according to

$$P_{a2n} = \frac{P_{a2}P_{b1}}{P_{b2}T_{amb}}$$

**215** Calcuate a pressure value $P_{b2n}$ for the second tire at the second time, normalised at the normalising temperature according to

$$P_{b2n} = \frac{P_{b2}P_{a1}}{P_{a2}T_{amb}}$$

**217** repeat steps 109, 111, and 113 at a plurality of second times to generate a time-series of normalised pressure values for the first tire

**219** repeat steps 109, 111, and 115 at a plurality of second times to generate a time-series of normalised pressure values for the second tire

**221** analyse the time-series of normalised pressure values for the first tire to determine if an air loss is present in the first tire

**223** analyse the time-series of normalised pressure values for the second tire to determine if an air loss is present in the second tire

**225** Provide an output if an air loss is determined

Fig. 4

Fig. 5a

Fig. 5b

Fig. 5c

External (valve mounted) sensor with pressure compensated using temperature measured on the external sensor

Fig. 6

External (valve mounted) sensor with pressure compensated using temperature calculated from opposite side tyre pressure

Legend:
- Right raw pressure
- - - Left raw pressure
—— Compensated pressure
—— Calculated temperature

Fig. 7

**Comparison of external valve temperature compensation vs opposite pressure calculated compensation**

Fig. 8

Europäisches
Patentamt

European
Patent Office

Office européen
des brevets

# EUROPEAN SEARCH REPORT

**Application Number**

EP 24 22 3083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/091720 A1 (GRAF JENS [DE] ET AL) 2 April 2015 (2015-04-02) * paragraph [0033] - paragraph [0063]; figures 1-3 * ----- | 1-15 | INV. B60C23/04 |
| A | US 5 780 733 A (MEUNIER ANDRE [FR]) 14 July 1998 (1998-07-14) * column 2 - column 4; figures 1,2 * ----- | 1-15 | |
| A | EP 4 306 337 A1 (BRIDGESTONE EUROPE NV SA [BE]) 17 January 2024 (2024-01-17) * paragraph [0042] - paragraph [0066]; figures 1-6 * ----- | 1-15 | |

**TECHNICAL FIELDS SEARCHED (IPC)**

B60C

The present search report has been drawn up for all claims

| Place of search | Date of completion of the search | Examiner |
|---|---|---|
| Munich | 18 March 2025 | Billen, Karl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 3083

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2025

| Patent document cited in search report | | Publication date | Patent family member(s) | | Publication date |
|---|---|---|---|---|---|
| US 2015091720 | A1 | 02-04-2015 | DE 102013219849 A1 | | 02-04-2015 |
| | | | US 2015091720 A1 | | 02-04-2015 |
| | | | US 2018015792 A1 | | 18-01-2018 |
| US 5780733 | A | 14-07-1998 | DE 69717697 T2 | | 09-10-2003 |
| | | | EP 0794074 A1 | | 10-09-1997 |
| | | | FR 2745755 A1 | | 12-09-1997 |
| | | | JP 3910250 B2 | | 25-04-2007 |
| | | | JP H09328005 A | | 22-12-1997 |
| | | | US 5780733 A | | 14-07-1998 |
| EP 4306337 | A1 | 17-01-2024 | CN 119654245 A | | 18-03-2025 |
| | | | EP 4306337 A1 | | 17-01-2024 |
| | | | WO 2024013252 A1 | | 18-01-2024 |

EPO FORM P0459

For more details about this annex : see Official Journal of the European Patent Office, No. 12/82